# EUROPEAN PATENT SPECIFICATION

(11) **EP 4 306 378 B1**
(45) Date of publication and mention of the grant of the patent: **02.10.2024**
(21) Application number: 23171486.6
(22) Date of filing: 04.05.2023
(51) Int. Cl.: B60W 30/14

(54) **VEHICLE CONTROL METHOD AND VEHICLE**
FAHRZEUGSTEUERUNGSVERFAHREN UND FAHRZEUG
PROCÉDÉ DE COMMANDE DE VÉHICULE ET VÉHICULE

(30) Priority: 14.07.2022 CN 202210833332
(43) Date of publication of application: 17.01.2024
(73) Proprietor: Gogoro Inc., Wanchai, Hong Kong (CN)
(72) Inventor: LI, Kai-Chiang, Taoyuan City 333 (TW); YANG, Ching-Tan, Taoyuan City 333 (TW); HUNG, Ying-Chih, Taoyuan City 333 (TW); LIU, Tzu-Yu, Taoyuan City 333 (TW)
(74) Representative: Viering, Jentschura & Partner mbB Patent- und Rechtsanwälte

(56) References cited:
- CN-A- 107 472 247
- DE-A1- 10 145 915
- DE-B4- 10 261 624
- US-A1- 2015 191 160

## Description

### BACKGROUND

### Technical Field

The present invention relates to a vehicle control method, and a vehicle.

### Description of Related Art

Driving safety requires a high degree of concentration and adaptability to achieve. People often drive dangerously due to distraction and fatigue, endangering the safety of themselves and others, and causing loss of life and property. Therefore, in recent years, the development of vehicles has gradually moved towards the direction of electronization and safety, and attempts to develop various electronic mechanisms to assist drivers in driving.

Cruise control is currently the most representative driving assistance mechanism commonly used in high-speed driving environments. The cruise control can reduce driver's action of operating an accelerator when the vehicle is driving at high speed, and the vehicle cruises at the speed set by the driver. However, actual traffic conditions are usually complicated. When the vehicle entering the cruise control mode is unable to reach a cruise target speed corresponding to the cruise control mode due to specific road conditions (such as a climbing road section), the vehicle will continue to try to accelerate hard, but as acceleration time is prolonged, the wear and tear of the vehicle may increase accordingly. Not only that, when the road conditions change suddenly (for example, from the climbing road section to a flat road or a downhill road section), the vehicle that was still accelerating at the previous moment will suddenly accelerate unexpectedly, which may endanger the driver's personal safety.

DE10145915A1 and DE10261624B4 disclose a cruise control method that utilizes both the brake and accelerator pedals to adjust the driving speed, thereby enhancing the system's usability.

US2015191160A1 and CN107472247A disclose a cruise control system that employs special logic with the accelerator pedal to increase the set speed, eliminating the need to use buttons on the steering wheel.

Accordingly, how to provide a vehicle control method to solve the aforementioned problems becomes an important issue to be solved by those in the industry.

### SUMMARY

An aspect of the invention is to provide a vehicle control method and a vehicle that can efficiently solve the aforementioned problems.

According to an embodiment of the invention, a vehicle control method includes: driving a vehicle entering a cruise control mode to travel at a cruise target speed corresponding to the cruise control mode; determining whether a torque strength outputted to a power system of the vehicle is greater than or equal to a predetermined torque strength and is continuously outputted for a predetermined period of time when the vehicle entering the cruise control mod does not travel at the cruise target speed; and changing the cruise target speed to a current speed of the vehicle when determining that the torque strength outputted to the power system of the vehicle is greater than or equal to the predetermined torque strength and is continuously outputted for the predetermined period of time.

In an embodiment of the invention, the predetermined torque strength is a maximum driving torque of the power system of the vehicle.

In an embodiment of the invention, the predetermined torque strength is a predetermined proportion of a maximum driving torque of the power system of the vehicle. The predetermined proportion is dynamically set based on the cruise target speed.

In an embodiment of the invention, the predetermined torque strength is a predetermined proportion of a maximum driving torque of the power system of the vehicle. The predetermined proportion is dynamically set based on a road gradient.

In an embodiment of the invention, the predetermined period of time is dynamically set based on the cruise target speed.

In an embodiment of the invention, the predetermined period of time is dynamically set based on a road gradient.

In an embodiment of the invention, the determining whether the torque strength outputted to the power system of the vehicle is greater than or equal to the predetermined torque strength and is continuously outputted for the predetermined period of time includes: determining whether the torque strength outputted to the power system of the vehicle is greater than or equal to the predetermined torque strength and is continuously outputted for the predetermined period of time when the vehicle entering the cruise control mode is decelerated from the cruise target speed.

In an embodiment of the invention, the determining whether the torque strength outputted to the power system of the vehicle is greater than or equal to the predetermined torque strength and is continuously outputted for the predetermined period of time includes: determining whether the torque strength outputted to the power system of the vehicle is greater than or equal to the predetermined torque strength and is continuously outputted for the predetermined period of time when the vehicle entering the cruise control mode is unable to accelerate to the cruise target speed.

According to an embodiment of the invention, a vehicle includes a body and a processor. The processor is disposed on the body and configured to: drive the vehicle entering a cruise control mode to travel at a cruise target speed corresponding to the cruise control mode; determine whether a torque strength outputted to a power system of the vehicle is greater than or equal to a predetermined torque strength and is continuously outputted for a predetermined period of time when the vehicle entering the cruise control mod does not travel at the cruise target speed; and change the cruise target speed to a current speed of the vehicle when determining that the torque strength outputted to the power system of the vehicle is greater than or equal to the predetermined torque strength and is continuously outputted for the predetermined period of time.

In an embodiment of the invention, the predetermined torque strength is a maximum driving torque of the power system of the vehicle.

In an embodiment of the invention, the predetermined torque strength is a predetermined proportion of a maximum driving torque of the power system of the vehicle. The predetermined proportion is dynamically set based on the cruise target speed.

In an embodiment of the invention, the predetermined torque strength is a predetermined proportion of a maximum driving torque of the power system of the vehicle. The predetermined proportion is dynamically set based on a road gradient.

In an embodiment of the invention, the predetermined period of time is dynamically set based on the cruise target speed.

In an embodiment of the invention, the predetermined period of time is dynamically set based on a road gradient.

In an embodiment of the invention, the processor is further configured to: determine whether the torque strength outputted to the power system of the vehicle is greater than or equal to the predetermined torque strength and is continuously outputted for the predetermined period of time when the vehicle entering the cruise control mode is decelerated from the cruise target speed.

In an embodiment of the invention, the processor is further configured to: determine whether the torque strength outputted to the power system of the vehicle is greater than or equal to the predetermined torque strength and is continuously outputted for the predetermined period of time when the vehicle entering the cruise control mode is unable to accelerate to the cruise target speed.

Accordingly, in the vehicle control method and the vehicle of the present invention, when the vehicle enters the cruise control mode, the vehicle will be driven to travel at the cruise target speed corresponding to the cruise control mode. Moreover, when the vehicle entering the cruise control mode does not travel at the cruise target speed, the processor will determine whether the torque strength outputted to the motor is greater than or equal to the predetermined torque strength and has been continuously outputted for the predetermined period of time. When it is determined that the torque strength outputted to the motor is indeed greater than or equal to the predetermined torque strength and has been continuously outputted for the predetermined period of time, the cruise target speed is changed to the current speed of the vehicle. In this way, abnormal wear and tear of the power system of the vehicle can be avoided during the time when the vehicle is trying to accelerate to the cruise target speed. Not only that, it can also avoid the problem of sudden unexpected acceleration of the vehicle due to sudden changes in road conditions (e.g., from a climbing section to a flat road or a downhill section suddenly), thus improving personal safety and driving experience of the driver.

It is to be understood that both the foregoing general description and the following detailed description are by examples, and are intended to provide further explanation of the invention as claimed.

### BRIEF DESCRIPTION OF THE DRAWINGS

The invention can be more fully understood by reading the following detailed description of the embodiment, with reference made to the accompanying drawings as follows:
Fig. 1 is a flow chart of a vehicle control method according to an embodiment of the present invention; and
Fig. 2 is a schematic diagram of a vehicle according to an embodiment of the present invention.

### DETAILED DESCRIPTION

Reference will now be made in detail to the present embodiments of the invention, examples of which are illustrated in the accompanying drawings. Wherever possible, the same reference numbers are used in the drawings and the description to refer to the same or like parts. However, specific structural and functional details disclosed herein are merely representative for purposes of describing example embodiments, and thus may be embodied in many alternate forms and should not be construed as limited to only example embodiments set forth herein. Therefore, it should be understood that there is no intent to limit example embodiments to the particular forms disclosed, but on the contrary, example embodiments are to cover all modifications, equivalents, and alternatives falling within the scope of the invention.

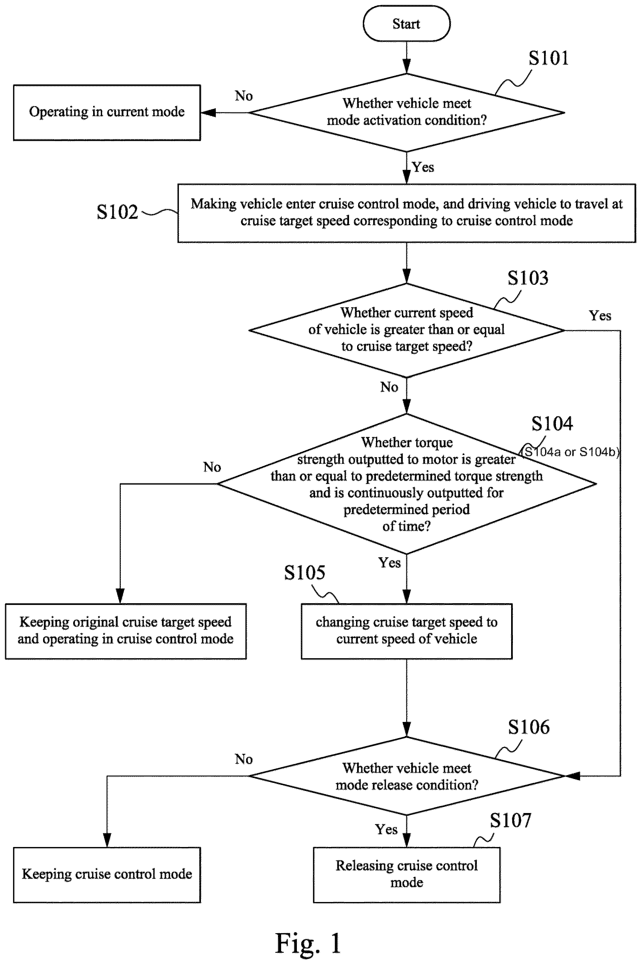

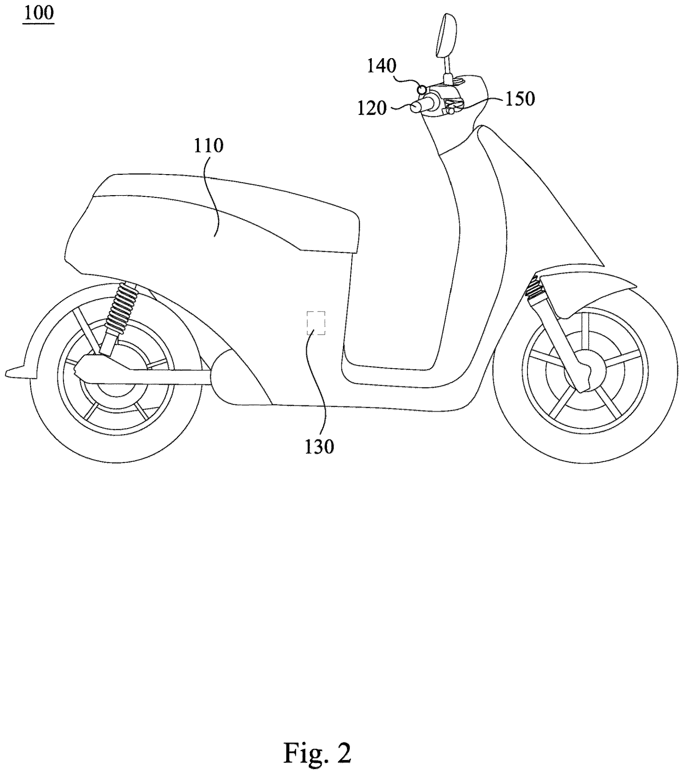

Reference is made to Figs. 1 and 2. Fig. 1 is a flow chart of a vehicle control method according to an embodiment of the present invention. Fig. 2 is a schematic diagram of a vehicle 100 according to an embodiment of the present invention. As shown in Figs. 1 and 2, in the present embodiment, the vehicle control method includes steps S101 and S102 and can be executed on the vehicle 100.

Step S101: determining whether the vehicle 100 meets a mode activation condition, in which the mode activation condition includes that the vehicle 100 receives a mode activation request signal. The mode activation request signal will be described in detail in the following paragraphs.

Step S102: making the vehicle 100 enter a cruise control mode and driving the vehicle 100 to travel at a cruise target speed corresponding to the cruise control mode when the vehicle 100 meets the mode activation condition. On the contrary, if the vehicle 100 does not meet the mode activation condition, the vehicle 100 keeps operating in the current mode. For example, if the vehicle 100 does not meet the mode activation condition, the vehicle 100 does not enter the cruise control mode, and accelerates and decelerates according to operating conditions of an accelerator and a brake.

In some embodiments, the vehicle 100 is a two-wheeled vehicle (such as a scooter-type vehicle or other straddle-type vehicle) or a transportation vehicle with more than two wheels, but the present invention is not limited in this regard. The vehicle control method can also be applied to other types of transportation vehicles.

In some embodiments, the vehicle 100 includes a body 110, a rotating handle 120, a processor 130, a function button 140, and a brake 150. The rotating handle 120, the processor 130, the function button 140, and the brake 150 are disposed on the body 110. For example, the function button 140 is a cruise control button or a combination button of cruise control and reverse, but the present invention is not limited in this regard. When the function button 140 is pressed when the vehicle 100 is not driving in the cruise control mode, the function button 140 generates a pressing signal and outputs it to the processor 130. The processor 130 receives the corresponding pressing signal, and regards the pressing signal as a mode activation request signal. For example, the function button 140 may be implemented by a switch, and the switch is coupled to the processor 130, a power terminal, and a ground terminal. When the function button 140 is pressed, the switch connects the power terminal and the ground terminal, so that a current surge is conducted to the processor 130, and the current surge is the mode activation request signal. Then, the processor 130 enables the cruise control mode according to the mode activation request signal. Using a switch as a button to trigger a specific function is a common practice in the field of electronic circuits, and details are not described in the present invention.

The aforementioned steps S101 and S102 are both executed by the processor 130. In some embodiments, the processor 130 takes the speed of the vehicle 100 when the mode activation request signal is received as a set speed of the cruise control mode (i.e., the aforementioned cruise target speed), and makes the vehicle 100 drive at the set speed. For example, when the cruise target speed is set at 60 km/h and the current speed of the vehicle 100 is less than 60 km/h, the processor 130 will accelerate the vehicle 100 to reach the cruise target speed.

In some embodiments, the processor 130 is, for example, a microprocessor, a microcontroller, a programmable logic controller (PLC), a programmable gate array (PGA), an application specific integrated circuit (ASIC), or a controller capable of receiving signals from various sensors, performing logical operations, and sending signals to various components.

In some embodiments, the mode activation condition includes that the speed of the vehicle 100 is equal to or greater than a predetermined speed. For example, the predetermined speed is about 10 km/h, but the present invention is not limited in this regard.

In some embodiments, the mode activation condition includes that stored power (also known as residual power) of an electrical energy storage device (not shown) of the vehicle 100 is greater than a predetermined power. In some embodiments, the vehicle 100 is an electric vehicle that uses a motor to drive a rear wheel and/or a front wheel, and electric power stored by the aforementioned electric energy storage device is a power source of the motor. For example, the predetermined power is about 12%, but the present invention is not limited in this regard. In this way, the vehicle control method of the present embodiment can prevent the vehicle 100 from entering the cruise control mode when the electric energy storage device is in a low power state.

In some embodiments, the aforementioned electrical energy storage device is, for example, any device that can store electricity and release the stored electricity, including but not limited to a battery pack or an ultracapacitor. The battery pack is, for example, one or more chemical storage cells, such as rechargeable or auxiliary battery cells (including, but not limited to, nickelcadmium or lithium-ion battery cells).

In some embodiments, the mode activation condition includes that a temperature of the electrical energy storage device is less than a predetermined temperature. For example, the predetermined temperature is about 63 degrees Celsius, but the present invention is not limited in this regard. In this way, the vehicle control method of the present embodiment can prevent the temperature of the electrical energy storage device from further increasing due to operating in the cruise control mode when the electrical energy storage device is at a high temperature, thereby preventing the electric energy storage device and/or the vehicle 100 from being damaged.

In some embodiments, the mode activation condition includes that the brake 150 of the vehicle 100 is not operated (i.e., the brake 150 is in an idle state). In this way, the vehicle control method of the present embodiment can effectively avoid an accidental touch by a driver. The accidental touch is, for example, that the driver actually wants to operate the brake 150 to decelerate the vehicle 100, but accidentally presses the aforementioned function button 140.

In some embodiments, the mode activation condition includes that the speed of the vehicle 100 is within a predetermined speed range. For example, the predetermined speed range is from about 10 km/h to about 60 km/h, but the present invention is not limited in this regard. In other words, when the speed of the vehicle 100 is less than 10 km/h or greater than 60 km/h, the vehicle 100 will not enter the cruise control mode. In this way, the vehicle control method of the present embodiment can prevent the vehicle 100 from driving at a speed other than the safe predetermined speed range which may cause safety hazards to the driver.

In some embodiments, the mode activation condition further includes that no load shedding occurs to a power system (e.g., the motor) of the vehicle 100. That is, the motor keeps outputting power stably. Specifically, a temperature sensor (not shown) is disposed beside or inside the motor. The temperature sensor senses temperature of the motor at any time, and outputs the sensed data to the processor 130. When the temperature of the motor is greater than a predetermined motor temperature (e.g., 100 degrees Celsius), the processor 130 adjusts torque outputted to the motor to dynamically limit driving torque, rotational speed, and output power of the motor, which is called load shedding. In other words, as long as the temperature of the motor remains at or below the predetermined motor temperature, no load shedding will occur to the motor.

As a side note, the temperature of the motor will start to drop after the load shedding occurs. The processor 130 will not release the load shedding until the temperature of the motor drops to be equal to or less than a safe motor temperature (the safe motor temperature is less than the predetermined motor temperature, e.g., 90 degrees Celsius). After the load shedding is released, the driving torque, rotational speed, and output power of the motor can be further increased to increase the current speed of the vehicle 100. Furthermore, the output power of the motor is proportional to the driving torque and the rotational speed.

In some embodiments, the vehicle 100 must meet a plurality of mode activation conditions to enter the cruise control mode. For example, when the processor 130 receives the mode activation request signal and the speed of the vehicle 100 is equal to or greater than the predetermined speed, the vehicle 100 switches to the cruise control mode. Alternatively, the vehicle 100 switches to the cruise control mode only when the processor 130 receives the mode activation request signal, the current speed of the vehicle 100 is equal to or greater than the predetermined speed, and the stored power of the electric energy storage device of the vehicle 100 is greater than the predetermined power. In some embodiments, the vehicle 100 must meet all the above-mentioned mode activation conditions before entering the cruise control mode.

In addition, the cruise target speed of the cruise control mode (the cruise target speed is equal to or greater than the predetermined speed) may be input to the processor 130 in advance. When the processor 130 receives the mode activation request signal, the processor 130 drives the motor to increase/decrease the speed of the vehicle 100 to the cruise target speed, and then switches the vehicle 100 to the cruise control mode. In some embodiments, the vehicle 100 switches to the cruise control mode only when the processor 130 receives the mode activation request signal and the vehicle 100 meets at least one of the aforementioned mode activation conditions (e.g., the stored power of the electrical energy storage device is greater than the predetermined power).

As shown in Fig. 1, in the present embodiment, the vehicle control method further includes steps S103, S104, and S105, and can be executed on the vehicle 100, in which steps S103, S104, and S105 are subsequent to step S102.

Step S103: determining whether the current speed of the vehicle 100 is greater than or equal to the cruise target speed by the processor 130. If the vehicle 100 does not travel at the cruise target speed, it means that the current speed of the vehicle 100 is still less than the cruise target speed and has not reached the cruise target speed. At this time, the processor 130 will determine that the vehicle 100 is in a state where the vehicle 100 is unable to be accelerated normally, and then proceeds to step S104. On the contrary, when the vehicle 100 travels at the cruise target speed, the processor 130 proceeds to step S106.

As a side note, the processor 130 detects the current speed of the vehicle 100 according to a speed sensor (not shown) disposed in the vehicle 100, but the present invention is not limited in this regard. In some embodiments, the processor 130 can also acquire the current speed of the vehicle 100 by using any current speed detection device.

Step S104: determining whether a torque strength currently outputted to the motor is greater than or equal to a predetermined torque strength and has been continuously outputted for a predetermined period of time (for example, 1 second) by the processor 130 when the vehicle 100 is not traveling at the cruise target speed. If the torque strength currently outputted to the motor is greater than or equal to the predetermined torque strength and has been continuously outputted for the predetermined period of time, the processor 130 proceeds to step S105. On the contrary, the processor 130 controls the vehicle 100 to keep the original cruise target speed to operate in the cruise control mode, that is, the processor 130 will not reduce the torque strength outputted to the motor at this time. The predetermined torque strength will be described in detail in the following paragraphs.

Specifically, the processor 130 may generate a torque control command according to the cruise target speed corresponding to the cruise control mode. The torque control command includes a torque strength and is used to control the driving torque, rotational speed, and output power of the motor, in which the output power of the motor is proportional to the driving torque and rotational speed. The predetermined torque strength is a set value which can be set as a maximum driving torque of the motor. In other words, when the torque strength corresponding to the torque control command is greater than or equal to the predetermined torque strength, the motor will operate at the maximum driving torque. And then, the processor 130 records and calculates the time for outputting the torque control command to determine whether to proceed to step S105.

Step S105: changing the cruise target speed to the current speed of vehicle 100 by the processor 130 when the processor 130 determines that the torque strength outputted to the motor is greater than or equal to the predetermined torque strength and has been continuously outputted for the predetermined period of time. In other words, at this time, the motor has been fully operating with the maximum driving torque, and the vehicle 100 is still unable to accelerate to the cruise target speed, which means that the vehicle 100 may not be able to increase the speed due to some physical factors. The physical factors may be weight of the vehicle 100, gradient of the road section where the vehicle 100 travels on, tire pressure, wind resistance, battery power, battery temperature, motor temperature, and the like. In order to avoid excessive wear and tear of the power system and excessive motor temperature leading to load shedding (which cause the current speed of the vehicle 100 to change drastically), the processor 130 dynamically adjusts the cruise target speed of the vehicle 100 to the current speed, so that the vehicle 100 continues to drive in the cruise control mode at the updated cruise target speed to avoid the above problems.

By executing steps S103, S104, and S105, a rapid increase in the wear and tear of the power system of the vehicle 100 can be avoided while the vehicle 100 is trying to accelerate to the cruise target speed. Not only that, the problem of sudden unintended acceleration of the vehicle 100 due to sudden changes in road conditions (for example, from a climbing section to a flat road or a downhill section suddenly) can also be avoided, so that personal safety and driving experience of the driver can be improved.

In some embodiments, the predetermined torque strength is configured to drive the power system of the vehicle 100 to operate at the maximum drive torque (i.e., to drive the motor to provide the maximum power), but the present invention is not limited in this regard. In some embodiments, the predetermined torque strength is a predetermined proportion (e.g., about 90% to about 95%) of the maximum driving torque of the power system of the vehicle 100, thereby further reducing wear and tear on the power system of the vehicle 100 during the time when the vehicle 100 is trying to accelerate to the cruise target speed.

In some embodiments, the predetermined proportion may be dynamically set based on the cruise target speed. A larger cruise target speed may correspond to a larger predetermined proportion, while a smaller cruise target speed may correspond to a smaller predetermined proportion. For example, if the cruise target speed is 100 km/h, the processor 130 sets the corresponding predetermined proportion to 100%. If the cruise target speed is 50 km/h, the processor 130 sets the corresponding predetermined proportion to 90%.

In some embodiments, the predetermined proportion may be dynamically set based on road conditions (e.g., the road gradient). A road with a larger road gradient may correspond to a larger predetermined proportion, and a road with a smaller road gradient may correspond to a smaller predetermined proportion. For example, if the road gradient of the road is 30%, the processor 130 sets the corresponding predetermined proportion to be 100%. If the road gradient of the road is 10%, the processor 130 sets the corresponding predetermined proportion to 95%.

In some embodiments, step S104 includes one of step S104a and step S104b.

Step S104a: determining whether the torque strength outputted to the motor is greater than or equal to the predetermined torque strength and is continuously outputted for the predetermined period of time by the processor 130 when the vehicle 100 is decelerated from the cruise target speed.

Step S104b: determining whether the torque strength outputted to the motor is greater than or equal to the predetermined torque strength and is continuously outputted for the predetermined period of time by the processor 130 when the vehicle 100 is unable to accelerate to the cruise target speed.

In other words, in step S104a, the driving situation of the vehicle 100 is to first reach the cruise target speed and then decelerate. In step S104b, the driving situation of the vehicle 100 is that the cruise target speed has not been reached from the beginning.

In some embodiments, the predetermined period of time may be dynamically set based on the cruise target speed. A larger cruise target speed may correspond to a larger predetermined period of time, and a smaller cruise target speed may correspond to a smaller predetermined period of time. For example, if the cruise target speed is 20 km/h, the processor 130 sets the corresponding predetermined period of time to 0.5 seconds. If the cruise target speed is 60 km/h, the processor 130 sets the corresponding predetermined period of time to 2 seconds.

In some embodiments, the predetermined period of time may be dynamically set based on road conditions (e.g., the road gradient). A road with a larger road gradient may correspond to a smaller predetermined period of time, and a road with a smaller road gradient may correspond to a larger predetermined period of time. For example, if the road gradient of the road is 30%, the processor 130 sets the corresponding predetermined period of time to 0.5 seconds. If the road gradient of the road is 10%, the processor 130 sets the corresponding predetermined period of time to 2 seconds.

In some embodiments, the aforementioned predetermined period of time is set to be equal to or greater than about 0.1 seconds, but the present invention is not limited in this regard.

As shown in Fig. 1, in the present embodiment, the vehicle control method further includes steps S106 and S107 and can be executed on the vehicle 100, in which step S106 is subsequent to steps S103 and S105, and step S107 is subsequent to step S106.

Step S106: determining whether the vehicle 100 meets a mode release condition by the processor 130 when the vehicle 100 is driving in the cruise control mode.

Step S107: releasing the cruise control mode by the processor 130 when the vehicle 100 meets the mode release condition. On the contrary, if the vehicle 100 does not meet the mode release condition, the processor 130 keeps the vehicle 100 operating in the cruise control mode.

In some embodiments, the mode release condition includes that the stored power of the electrical energy storage device of the vehicle 100 is equal to or less than the predetermined power. In some embodiments, the vehicle 100 is an electric vehicle that uses a motor to drive the rear wheel and/or the front wheel, and the electric power stored by the aforementioned electric energy storage device is the power source of the motor. For example, the predetermined power is about 12%, but the present invention is not limited in this regard. In this way, the vehicle control method of the present embodiment can automatically release the vehicle 100 from the cruise control mode when the electric energy storage device is in a low battery condition, so as to avoid further power consumption of the vehicle 100.

In some embodiments, the mode release condition includes that the temperature of the electrical energy storage device is equal to or greater than the predetermined temperature. For example, the predetermined temperature is about 63 degrees Celsius, but the present invention is not limited in this regard. In this way, the vehicle control method of the present embodiment can automatically release the vehicle 100 from the cruise control mode when the electric energy storage device is at a high temperature, so as to avoid the electric energy storage device and/or the vehicle 100 from being damaged due to further increase of the temperature of the electric energy storage device.

In some embodiments, the mode release condition includes that the speed of the vehicle 100 is equal to or less than a safe speed. For example, the safe speed is about 5 km/h, but the present invention is not limited in this regard. In some embodiments, the safe speed may be set to be less than the predetermined speed. In this way, the vehicle control method of the present embodiment can automatically release the cruise control mode when the vehicle 100 is unable to travel at the set speed of the cruise control mode due to certain factors (for example, the vehicle 100 climbs a steep slope), so as to avoid excessive wear and tear of the power system of the vehicle 100.

In some embodiments, the processor 130 may not set the safe speed, but directly use the predetermined speed to determine whether to release the cruise control mode. For example, when the speed of the vehicle 100 is less than the predetermined speed, the processor 130 determines that the vehicle 100 meets the mode release condition, and releases the cruise control mode.

In some embodiments, the mode release condition includes that the vehicle 100 receives a mode release request signal. In some embodiments, when the function button 140 is pressed during the vehicle 100 is driving in the cruise control mode, the processor 130 can receive the corresponding pressing signal, regard the pressing signal as the mode release request signal, and then release the cruise control mode according to the mode release request signal. As mentioned above, the function button 140 can be implemented by a switch to generate and output the pressing signal.

In some embodiments, when the brake 150 of the vehicle 100 is operated during the vehicle 100 is driving in the cruise control mode (that is, the brake 150 is in a pressed state), the processor 130 can receive a corresponding operation signal and regard the operation signal as the mode release request signal. In this way, the vehicle control method of the present embodiment allows the driver to autonomously determine the timing of releasing the cruise control mode through manual operation. In some embodiments, the processor 130 will not release the cruise control mode until the brake 150 is operated for a certain period of time (e.g., more than 3 seconds).

In some embodiments, the mode release condition includes that the load shedding occurs to the power system of the vehicle 100 (i.e., the temperature of the motor is greater than the predetermined motor temperature). At this time, the processor 130 determines that the temperature of the motor is too high, which may affect the driving safety, and releases the cruise control mode.

In some embodiments, when only one of the aforementioned mode release conditions is satisfied, the processor 130 controls the vehicle 100 to release the cruise control mode. In some embodiments, the cruise control mode is released only when the vehicle 100 meets at least two of the aforementioned mode release conditions. Alternatively, in some embodiments, the cruise control mode is released only when the vehicle 100 meets each of the aforementioned mode release conditions.

In some embodiments, the vehicle control method of the present invention may be implemented through one or more microcontrollers. However, those skilled in the art will recognize that the embodiments disclosed herein, in whole or in part, can be equivalently implemented in standard integrated circuits (e.g., Application Specific Integrated Circuits or ASICs), as one or more computer programs executed by one or more computers (e.g., as one or more programs running on one or more computer systems), as one or more programs executed by on one or more controllers (e.g., microcontrollers) as one or more programs executed by one or more processors 130 (e.g., microprocessors), as firmware, or as virtually any combination thereof, and that designing the circuitry and/or writing the code for the software and/or firmware would be well within the skill of one of ordinary skill in the art in light of the teachings of this invention.

When logic is implemented as software/firmware and stored in memory, logic or information can be stored on any non-transitory computer readable medium for use by or in connection with any processor-related system or method. In the context of this invention, a memory is a non-transitory computer-readable or processor-readable storage medium that is an electronic, magnetic, optical, or other physical device or means that non-transitorily contains or stores a computer and/or processor program. Logic and/or the information can be embodied in any computer readable medium for use by or in connection with an instruction execution system, apparatus, or device, such as a computer-based system, processor-containing system, or other system that can fetch the instructions from the instruction execution system, apparatus, or device and execute the instructions associated with logic and/or information.

In some embodiments, the non-transitory computer readable storage medium having computer executable instructions thereon that, when executed by one or more computer processors 130, cause the one or more computer processors 130 to: generate a control command for a vehicle 100 entering a cruise control mode to drive the vehicle 100 to travel at a cruise target speed corresponding to the cruise control mode; determine whether a torque strength outputted to a motor is greater than or equal to a predetermined torque strength and is continuously outputted for a predetermined period of time when information related to that the vehicle 100 entering the cruise control mode does not travel at the cruise target speed is received; and generate a control command for changing the cruise target speed to a current speed of the vehicle 100 when determining that the torque strength outputted to the motor is greater than or equal to the predetermined torque strength and is continuously outputted for the predetermined period of time.

In some embodiments, the instruction that cause the one or more computer processors 130 to determine whether the torque strength outputted to the motor is greater than or equal to the predetermined torque strength and is continuously outputted for the predetermined period of time further cause the one or more computer processors 130 to: determine whether the torque strength outputted to the motor is greater than or equal to the predetermined torque strength and is continuously outputted for the predetermined period of time when information related to that the vehicle 100 entering the cruise control mode is decelerated from the cruise target speed is received.

In some embodiments, the instruction that cause the one or more computer processors 130 to determine whether the torque strength outputted to the motor is greater than or equal to the predetermined torque strength and is continuously outputted for the predetermined period of time further cause the one or more computer processors 130 to: determine whether the torque strength outputted to the motor is greater than or equal to the predetermined torque strength and is continuously outputted for the predetermined period of time when information related to that the vehicle entering the cruise control mode is unable to accelerate to the cruise target speed is received.

According to the foregoing recitations of the embodiments of the invention, it can be seen that in the vehicle control method, and the vehicle of the present invention, when the vehicle enters the cruise control mode, the vehicle will be driven to travel at the cruise target speed corresponding to the cruise control mode. Moreover, when the vehicle entering the cruise control mode does not travel at the cruise target speed, the processor will determine whether the torque strength outputted to the motor is greater than or equal to the predetermined torque strength and has been continuously outputted for the predetermined period of time. When it is determined that the torque strength outputted to the motor is indeed greater than or equal to the predetermined torque strength and has been continuously outputted for the predetermined period of time, the cruise target speed is changed to the current speed of the vehicle. In this way, abnormal wear and tear of the power system of the vehicle can be avoided during the time when the vehicle is trying to accelerate to the cruise target speed. Not only that, it can also avoid the problem of sudden unexpected acceleration of the vehicle due to sudden changes in road conditions (e.g., from a climbing section to a flat road or a downhill section suddenly), thus improving personal safety and driving experience of the driver.

## Claims

1. A vehicle control method, comprising:
driving a vehicle (100) entering a cruise control mode to travel at a cruise target speed corresponding to the cruise control mode;
determining whether a torque strength outputted to a power system of the vehicle (100) is greater than or equal to a predetermined torque strength and is continuously outputted for a predetermined period of time when the vehicle (100) does not travel at the cruise target speed; and
changing the cruise target speed to a current speed of the vehicle (100) when determining that the torque strength outputted to the power system of the vehicle (100) is greater than or equal to the predetermined torque strength and is continuously outputted for the predetermined period of time.

2. The vehicle control method of claim 1, wherein the predetermined torque strength is a maximum driving torque of the power system of the vehicle (100).

3. The vehicle control method of claim 1, wherein the predetermined torque strength is a predetermined proportion of a maximum driving torque of the power system of the vehicle (100), and the predetermined proportion is dynamically set based on the cruise target speed.

4. The vehicle control method of claim 1, wherein the predetermined torque strength is a predetermined proportion of a maximum driving torque of the power system of the vehicle (100), and the predetermined proportion is dynamically set based on a road gradient.

5. The vehicle control method of any preceding claims, wherein the predetermined period of time is dynamically set based on the cruise target speed.

6. The vehicle control method of any of claims 1-4, wherein the predetermined period of time is dynamically set based on a road gradient.

7. The vehicle control method of any preceding claims, wherein the determining whether the torque strength outputted to the power system of the vehicle (100) is greater than or equal to the predetermined torque strength and is continuously outputted for the predetermined period of time comprises:
determining whether the torque strength outputted to the power system of the vehicle (100) is greater than or equal to the predetermined torque strength and is continuously outputted for the predetermined period of time when the vehicle (100) entering the cruise control mode is decelerated from the cruise target speed.

8. The vehicle control method of any of claims 1-6, wherein the determining whether the torque strength outputted to the power system of the vehicle (100) is greater than or equal to the predetermined torque strength and is continuously outputted for the predetermined period of time comprises:
determining whether the torque strength outputted to the power system of the vehicle (100) is greater than or equal to the predetermined torque strength and is continuously outputted for the predetermined period of time when the vehicle (100) entering the cruise control mode is unable to accelerate to the cruise target speed.

9. A vehicle (100), comprising:
a body (110); and
a processor (130) disposed on the body (110) and configured to:
drive the vehicle (100) entering a cruise control mode to travel at a cruise target speed corresponding to the cruise control mode;
determine whether a torque strength outputted to a power system of the vehicle (100) is greater than or equal to a predetermined torque strength and is continuously outputted for a predetermined period of time when the vehicle (100) does not travel at the cruise target speed; and
change the cruise target speed to a current speed of the vehicle (100) when determining that the torque strength outputted to the power system of the vehicle (100) is greater than or equal to the predetermined torque strength and is continuously outputted for the predetermined period of time.

10. The vehicle (100) of claim 9, wherein the predetermined torque strength is a maximum driving torque of the power system of the vehicle (100).

11. The vehicle (100) of claim 9, wherein the predetermined torque strength is a predetermined proportion of a maximum driving torque of the power system of the vehicle (100), and the predetermined proportion is dynamically set based on the cruise target speed.

12. The vehicle (100) of claim 9, wherein the predetermined torque strength is a predetermined proportion of a maximum driving torque of the power system of the vehicle (100), and the predetermined proportion is dynamically set based on a road gradient.

13. The vehicle (100) of any of claims 9-12, wherein the predetermined period of time is dynamically set based on the cruise target speed.

14. The vehicle (100) of any of claims 9-12, wherein the predetermined period of time is dynamically set based on a road gradient.

15. The vehicle (100) of any of claims 9-14, wherein the processor (130) is further configured to:
determine whether the torque strength outputted to the power system of the vehicle (100) is greater than or equal to the predetermined torque strength and is continuously outputted for the predetermined period of time when the vehicle (100) entering the cruise control mode is decelerated from the cruise target speed.

16. The vehicle (100) of any of claims 9-14, wherein the processor (130) is further configured to:
determine whether the torque strength outputted to the power system of the vehicle (100) is greater than or equal to the predetermined torque strength and is continuously outputted for the predetermined period of time when the vehicle (100) entering the cruise control mode is unable to accelerate to the cruise target speed.

## Patentansprüche

1. Fahrzeugsteuerungsverfahren, aufweisend:
Ansteuern eines Fahrzeugs (100), welches in einen Geschwindigkeitsregelungsmodus eintritt, um sich mit einer Soll-Fahrgeschwindigkeit fortzubewegen, welche mit dem Geschwindigkeitsregelungsmodus korrespondiert;
Ermitteln, ob eine Drehmomentstärke, welche an ein Antriebssystem des Fahrzeugs (100) ausgegeben wird, größer als oder gleich einer vorbestimmten Drehmomentstärke ist und kontinuierlich für einen vorbestimmten Zeitraum ausgegeben wird, wenn sich das Fahrzeug (100) nicht mit der Soll-Fahrgeschwindigkeit fortbewegt; und
Ändern der Soll-Fahrgeschwindigkeit auf eine aktuelle Geschwindigkeit des Fahrzeugs (100), wenn ermittelt wird, dass die Drehmomentstärke, welche an das Antriebssystem des Fahrzeugs (100) ausgegeben wird, größer als oder gleich der vorbestimmten Drehmomentstärke ist und kontinuierlich für den vorbestimmten Zeitraum ausgegeben wird.

2. Fahrzeugsteuerungsverfahren gemäß Anspruch 1, wobei die vorbestimmte Drehmomentstärke ein maximales Antriebsdrehmoment des Antriebssystems des Fahrzeugs (100) ist.

3. Fahrzeugsteuerungsverfahren gemäß Anspruch 1, wobei die vorbestimmte Drehmomentstärke ein vorbestimmter Anteil eines maximalen Antriebsdrehmoments des Antriebssystems des Fahrzeugs (100) ist, und der vorbestimmte Anteil basierend auf der Soll-Fahrgeschwindigkeit dynamisch eingestellt wird.

4. Fahrzeugsteuerungsverfahren gemäß Anspruch 1, wobei die vorbestimmte Drehmomentstärke ein vorbestimmter Anteil eines maximalen Antriebsdrehmoments des Antriebssystems des Fahrzeugs (100) ist, und der vorbestimmte Anteil basierend auf einer Straßenneigung dynamisch eingestellt wird.

5. Fahrzeugsteuerungsverfahren gemäß einem beliebigen der vorhergehenden Ansprüche, wobei der vorbestimmte Zeitraum basierend auf der Soll-Fahrgeschwindigkeit dynamisch eingestellt wird.

6. Fahrzeugsteuerungsverfahren gemäß einem beliebigen der Ansprüche 1 bis 4, wobei der vorbestimmte Zeitraum basierend auf einer Straßenneigung dynamisch eingestellt wird.

7. Fahrzeugsteuerungsverfahren gemäß einem beliebigen der vorhergehenden Ansprüche, wobei das Ermitteln, ob die Drehmomentstärke, welche an das Antriebssystem des Fahrzeugs (100) ausgegeben wird, größer als oder gleich der vorbestimmten Drehmomentstärke ist und kontinuierlich für den vorbestimmten Zeitraum ausgegeben wird, aufweist:
Ermitteln, ob die Drehmomentstärke, welche an das Antriebssystem des Fahrzeugs (100) ausgegeben wird, größer als oder gleich der vorbestimmten Drehmomentstärke ist und kontinuierlich für den vorbestimmten Zeitraum ausgegeben wird, wenn das Fahrzeug (100), welches in den Geschwindigkeitsregelungsmodus eintritt, von der Soll-Fahrgeschwindigkeit aus abgebremst wird.

8. Fahrzeugsteuerungsverfahren gemäß einem beliebigen der Ansprüche 1 bis 6, wobei das Ermitteln, ob die Drehmomentstärke, welche an das Antriebssystem des Fahrzeugs (100) ausgegeben wird, größer als oder gleich der vorbestimmten Drehmomentstärke ist und kontinuierlich für den vorbestimmten Zeitraum ausgegeben wird, aufweist:
Ermitteln, ob die Drehmomentstärke, welche an das Antriebssystem des Fahrzeugs (100) ausgegeben wird, größer als oder gleich der vorbestimmten Drehmomentstärke ist und kontinuierlich für den vorbestimmten Zeitraum ausgegeben wird, wenn das Fahrzeug (100), welches in den Geschwindigkeitsregelungsmodus eintritt, nicht dazu in der Lage ist, auf die Soll-Fahrgeschwindigkeit zu beschleunigen.

9. Fahrzeug (100), aufweisend:
einen Körper (110) und
einen Prozessor (130), welcher an dem Körper (110) angeordnet ist und konfiguriert ist, um:
das Fahrzeug (100), welches in einen Geschwindigkeitsregelungsmodus eintritt, anzusteuern, um sich mit einer Soll-Fahrgeschwindigkeit, welche mit dem Geschwindigkeitsregelungsmodus korrespondiert, fortzubewegen;
zu ermitteln, ob eine Drehmomentstärke, welche an ein Antriebssystem des Fahrzeugs (100) ausgegeben wird, größer als oder gleich einer vorbestimmten Drehmomentstärke ist und kontinuierlich für einen vorbestimmten Zeitraum ausgegeben wird, wenn das Fahrzeug (100) sich nicht mit der Soll-Fahrgeschwindigkeit fortbewegt; und
die Soll-Fahrgeschwindigkeit auf die aktuelle Geschwindigkeit des Fahrzeugs (100) zu ändern, wenn ermittelt wird, dass die Drehmomentstärke, welche an das Antriebssystem des Fahrzeugs (100) ausgegeben wird, größer als oder gleich der vorbestimmten Drehmomentstärke ist und kontinuierlich für den vorbestimmten Zeitraum ausgegeben wird.

10. Fahrzeug (100) gemäß Anspruch 9, wobei die vorbestimmte Drehmomentstärke ein maximales Antriebsdrehmoment des Antriebssystems des Fahrzeugs (100) ist.

11. Fahrzeug (100) gemäß Anspruch 9, wobei die vorbestimmte Drehmomentstärke ein vorbestimmter Anteil eines maximalen Antriebsdrehmoments des Antriebssystems des Fahrzeugs (100) ist, und der vorbestimmte Anteil basierend auf der Soll-Fahrgeschwindigkeit dynamisch eingestellt ist.

12. Fahrzeug (100) gemäß Anspruch 9, wobei die vorbestimmte Drehmomentstärke ein vorbestimmter Anteil eines maximalen Antriebsdrehmoments des Antriebssystems des Fahrzeugs (100) ist, und der vorbestimmte Anteil basierend auf einer Straßenneigung dynamisch eingestellt ist.

13. Fahrzeug (100) gemäß einem beliebigen der Ansprüche 9 bis 12, wobei der vorbestimmte Zeitraum basierend auf der Soll-Fahrgeschwindigkeit dynamisch eingestellt ist.

14. Fahrzeug (100) gemäß einem beliebigen der Ansprüche 9 bis 12, wobei der vorbestimmte Zeitraum basierend auf einer Straßenneigung dynamisch eingestellt ist.

15. Fahrzeug (100) gemäß einem beliebigen der Ansprüche 9 bis 14, wobei der Prozessor (130) ferner konfiguriert ist, um:
zu ermitteln, ob die Drehmomentstärke, welche an das Antriebssystem des Fahrzeugs (100) ausgegeben wird, größer als oder gleich der vorbestimmten Drehmomentstärke ist und kontinuierlich für den vorbestimmten Zeitraum ausgegeben wird, wenn das Fahrzeug (100), welches in den Geschwindigkeitsregelungsmodus eintritt, von der Soll-Fahrgeschwindigkeit aus abgebremst wird.

16. Fahrzeug (100) gemäß einem beliebigen der Ansprüche 9 bis 14, wobei der Prozessor (130) ferner konfiguriert ist, um:
zu ermitteln, ob die Drehmomentstärke, welche an das Antriebssystem des Fahrzeugs (100) ausgegeben wird, größer als oder gleich der vorbestimmten Drehmomentstärke ist und kontinuierlich für den vorbestimmten Zeitraum ausgegeben wird, wenn das Fahrzeug (100), welches in den Geschwindigkeitsregelungsmodus eintritt, nicht dazu in der Lage ist, auf die Soll-Fahrgeschwindigkeit zu beschleunigen.

## Revendications

1. Procédé de commande de véhicule, comprenant :
l'entraînement d'un véhicule (100) entrant dans un mode de régulation de vitesse pour rouler à une vitesse cible de croisière correspondant au mode de régulation de vitesse ;
la détermination si une force de couple délivrée à un système de puissance du véhicule (100) est supérieure ou égale à une force de couple prédéterminée et est délivrée en continu pendant une période de temps prédéterminée lorsque le véhicule (100) ne roule pas à la vitesse cible de croisière ; et
le changement de la vitesse cible de croisière en une vitesse actuelle du véhicule (100) lorsqu'il est déterminé que la force de couple délivrée au système de puissance du véhicule (100) est supérieure ou égale à la force de couple prédéterminée et est délivrée en continu pendant la période de temps prédéterminée.

2. Procédé de commande de véhicule selon la revendication 1, dans lequel la force de couple prédéterminée est un couple d'entraînement maximal du système de puissance du véhicule (100).

3. Procédé de commande de véhicule selon la revendication 1, dans lequel la force de couple prédéterminée est une proportion prédéterminée d'un couple d'entraînement maximal du système de puissance du véhicule (100), et la proportion prédéterminée est réglée dynamiquement sur la base de la vitesse cible de croisière.

4. Procédé de commande de véhicule selon la revendication 1, dans lequel la force de couple prédéterminée est une proportion prédéterminée d'un couple d'entraînement maximal du système de puissance du véhicule (100), et la proportion prédéterminée est réglée dynamiquement sur la base d'une pente de route.

5. Procédé de commande de véhicule selon l'une quelconque des revendications précédentes, dans lequel la période de temps prédéterminée est réglée dynamiquement sur la base de la vitesse cible de croisière.

6. Procédé de commande de véhicule selon l'une quelconque des revendications 1 à 4, dans lequel la période de temps prédéterminée est réglée dynamiquement sur la base d'une pente de route.

7. Procédé de commande de véhicule selon l'une quelconque des revendications précédentes, dans lequel la détermination si la force de couple délivrée au système de puissance du véhicule (100) est supérieure ou égale à la force de couple prédéterminée et est délivrée en continu pendant la période de temps prédéterminée comprend :
la détermination si la force de couple délivrée au système de puissance du véhicule (100) est supérieure ou égale à la force de couple prédéterminée et est délivrée en continu pendant la période de temps prédéterminée lorsque le véhicule (100) entrant dans le mode de régulation de vitesse est décéléré à partir de la vitesse cible de croisière.

8. Procédé de commande de véhicule selon l'une quelconque des revendications 1 à 6, dans lequel la détermination si la force de couple délivrée au système de puissance du véhicule (100) est supérieure ou égale à la force de couple prédéterminée et est délivrée en continu pendant la période de temps prédéterminée comprend :
la détermination si la force de couple délivrée au système de puissance du véhicule (100) est supérieure ou égale à la force de couple prédéterminée et est délivrée en continu pendant la période de temps prédéterminée lorsque le véhicule (100) entrant dans le mode de régulation de vitesse est incapable d'accélérer jusqu'à la vitesse cible de croisière.

9. Véhicule (100), comprenant :
un corps (110) ; et
un processeur (130) disposé sur la carrosserie (110) et configuré pour :
entraîner le véhicule (100) entrant dans un mode de régulation de vitesse pour rouler à une vitesse cible de croisière correspondant au mode de régulation de vitesse ;
déterminer si une force de couple délivrée à un système de puissance du véhicule (100) est supérieure ou égale à une force de couple prédéterminée et est délivrée en continu pendant une période de temps prédéterminée lorsque le véhicule (100) ne roule pas à la vitesse cible de croisière ; et
changer la vitesse cible de croisière en une vitesse actuelle du véhicule (100) lorsqu'il est déterminé que la force de couple délivrée au système de puissance du véhicule (100) est supérieure ou égale à la force de couple prédéterminée et est délivrée de manière continue pendant la période de temps prédéterminée.

10. Véhicule (100) selon la revendication 9, dans lequel la force de couple prédéterminée est un couple d'entraînement maximal du système de puissance du véhicule (100).

11. Véhicule (100) selon la revendication 9, dans lequel la force de couple prédéterminée est une proportion prédéterminée d'un couple d'entraînement maximal du système de puissance du véhicule (100), et la proportion prédéterminée est réglée dynamiquement sur la base de la vitesse cible de croisière.

12. Véhicule (100) selon la revendication 9, dans lequel la force de couple prédéterminée est une proportion prédéterminée d'un couple d'entraînement maximal du système de puissance du véhicule (100), et la proportion prédéterminée est réglée dynamiquement sur la base d'une pente de route.

13. Véhicule (100) selon l'une quelconque des revendications 9 à 12, dans lequel la période de temps prédéterminée est réglée dynamiquement sur la base de la vitesse cible de croisière.

14. Véhicule (100) selon l'une quelconque des revendications 9 à 12, dans lequel la période de temps prédéterminée est réglée dynamiquement sur la base d'une pente de route.

15. Véhicule (100) selon l'une quelconque des revendications 9 à 14, dans lequel le processeur (130) est en outre configuré pour :
déterminer si la force de couple délivrée au système de puissance du véhicule (100) est supérieure ou égale à la force de couple prédéterminée et est délivrée en continu pendant la période de temps prédéterminée lorsque le véhicule (100) entrant dans le mode de régulation de vitesse est décéléré à partir de la vitesse cible de croisière.

16. Véhicule (100) selon l'une quelconque des revendications 9 à 14, dans lequel le processeur (130) est en outre configuré pour :
déterminer si la force de couple délivrée au système de puissance de véhicule (100) est supérieure ou égale à la force de couple prédéterminée et est délivrée en continu pendant la période de temps prédéterminée lorsque le véhicule (100) entrant dans le mode de régulation de vitesse est incapable d'accélérer jusqu'à la vitesse cible de croisière.
